Europäisches Patentamt

European Patent Office

Office européen des brevets

(11) Veröffentlichungsnummer: **0 162 204**
**A2**

(12) **EUROPÄISCHE PATENTANMELDUNG**

(21) Anmeldenummer: **85102356.4**

(22) Anmeldetag: **01.03.85**

(51) Int. Cl.⁴: **F 16 G 3/00**

(30) Priorität: **22.05.84 DE 8415524 U**

(43) Veröffentlichungstag der Anmeldung:
**27.11.85 Patentblatt 85/48**

(84) Benannte Vertragsstaaten:
**AT BE CH DE FR GB LI NL SE**

(71) Anmelder: **Franz Grimme Landmaschinenfabrik GmbH & Co. KG.**

**D-2845 Damme(DE)**

(72) Erfinder: **Grimme, Franz, sen.**
**Alter Schulweg 11**
**D-2845 Damme 1(DE)**

(74) Vertreter: **Busse & Busse Patentanwälte**
**Postfach 1226 Grosshandelsring 6**
**D-4500 Osnabrück(DE)**

(54) **Riemenschloss für Riemen von Siebkettenförderbändern.**

(57) Das Riemenschloß für Riemen (1) von Siebkettenförderbändern, insbesondere von Hackfruchterntemaschinen, umfaßt ein etwa H-förmiges Zwischenkupplungsstück (3), dessen Querschenkel (6) in einem Zwischenraum zwischen Querösen (15;16) an den Enden zu verbindender Riemen (1) verläuft und dessen Längsschenkel (7,8) die Querösen (15;16) gabelförmig seitlich umgreifen und mit paarweise fluchtenden Querbohrungen (9,10;11,2) zur Aufnahme der Enden von Kettenstäben (13,14) versehen sind, die als Querstecker jeweils zugleich eine Queröse (15;16) an einem Riemenende verriegelnd durchgreifen. Dabei ist jede Queröse (15;16) vom Bogenteil (19,20) eines etwa U-förmigen Anschlußstücks (4,5) gebildet, dessen Schenkel (21,22;23,24) mittels Spannschrauben (25,26) in Spanneingriff mit einem zwischen sie eingeführten Ende des Riemens (1) zusammendrückbar und innenseitig mit Verankerungsansätzen (30) versehen sind.

Fig. 2

EP 0 162 204 A2

0162204

- 1 -

DB/Ha

Riemenschloß für Riemen von Siebkettenförderbändern

Die Erfindung bezieht sich auf ein Riemenschloß für Riemen
von Siebkettenförderbändern, insbesondere von Hackfruchterntemaschinen, in einer Ausbildung gemäß dem Oberbegriff
des Anspruchs 1.

Bei einem bekannten Riemenschloß dieser Art, das ein leichtes
Öffnen und Schließen erlaubt und eine Verbindung der Riemenenden schafft, welche der Belastbarkeit der Riemen außerhalb
des Schloßbereiches nicht wesentlich nachsteht, sind die
Querösen fester Bestandteil der Enden der Riemen und von
Formstücken gebildet, die in schlaufenförmig umgelegten Endbereichen des Trägerriemens festgelegt, z.B. einvulkanisiert
sind.

Der Erfindung liegt die Aufgabe zugrunde, ein preisgünstigeres
Riemenschloß für Riemen von Siebkettenbändern zu schaffen,
mit dem Abschnitte von endloser Riemenware verbindbar sind.
Diese Aufgabe löst die Erfindung mit den Merkmalen des kennzeichnenden Teils des Anspruchs 1. Hinsichtlich weiterer Ausgestaltungen wird auf die Ansprüche 2 bis 8 verwiesen.

Das erfindungsgemäße Riemenschloß ist zur Verbindung von Riemenenden nicht mehr auf vorkonfektionierte, endseitig mit einvulkanisierten Querösen versehene Spezialriemen angewiesen,
sondern mit Hilfe der einfachen Anschlußstücke zur Verbindung
von einfachen Abschnitten von endloser Riemenware in der Lage.

Dies verringert nicht nur die Gestehungskosten eines Siebkettenförderbandes, sondern ermöglicht auch ein einfaches
Anpassen der Riemenlängen an Abmessungsschwankungen. Im
Falle des Auftretens von Beschädigungen an den Riemenenden
sind Reparaturen auf einfache Weise möglich. Schließlich vereinfacht sich die Lagerhaltung auf eine Bevorratung einfachen
endlosen Riemenmaterials.

In der Zeichnung ist in schematischer, vereinfachter Darstellung ein Ausführungsbeispiel des Gegenstands der Erfindung
näher veranschaulicht. In der Zeichnung zeigen:

Fig. 1          eine abgebrochene perspektivische Darstellung
                eines Siebkettenförderbandes nach der Erfindung
                in einem auf den Verbindungsbereich eines Riemens
                beschränkten Bereich, und

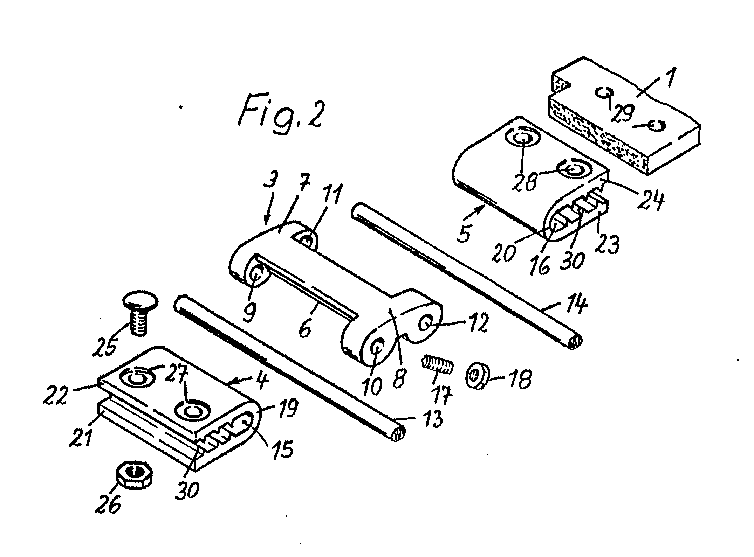

Fig. 2          eine perspektivische Explosionsdarstellung der
                Teile des in Fig. 1 veranschaulichten Ausschnitts.

Das dargestellte Siebkettenförderband besteht im einzelnen
aus zumindest zwei parallel im Abstand zueinander verlaufenden,
im Betrieb zu einer endlosen Schlaufe geschlossenen Riemen,
von denen einer in der Zeichnung im Ausschnitt wiedergegeben
und mit 1 bezeichnet ist. Das Siebkettenförderband, das überwiegend bei Hackfruchterntemaschinen Anwendung findet, umfaßt
ferner eine Vielzahl von Kettenstäben 2, die in gleichmäßiger
Abstandsverteilung über die Länge der Riemen 1 an ihren Enden
mit den Riemen 1 verbunden, z.B. vernietet, sind und sich
quer zur Riemenlängsrichtung erstrecken.

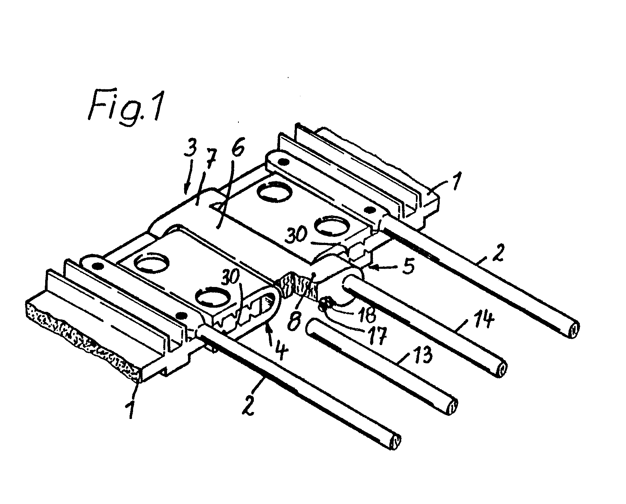

Die einander zugewandten Enden des Riemens 1 sind mittels eines
Riemenschlosses untereinander verbunden, das aus einem etwa
H-förmigen Zwischenkupplungsstück 3 und aus zwei Anschlußstücken 4,5 besteht. Das Zwischenkupplungsstück 3 umfaßt einen
Querschenkel 6 und an dessen Enden angeordnete Längsschenkel 7,8
welche die dem Querschenkel 6 zugewandten Endbereiche der Anschlußstücke 4,5 gabelförmig seitlich umgreifen. Die Längsschenkel 7,8 sind mit paarweise fluchtenden Querbohrungen 9,10 bzw. 11,12 zur Aufnahme der Enden weiterer Kettenstäbe 13,14 versehen, die in der Verbindungsstellung der Teile gemäß Fig. 1 Querösen 15,16 der Anschlußstücke 4,5 durchgreifen. Zur Fixierung der Kettenstäbe 13,14 in den Querbohrungen 9,10 bzw. 11,12 des Zwischenkupplungsstücks 3 können Madenklemmschrauben 17 vorgesehen sein, die zumindest im Bereich der Querbohrungen 10 und 12 auf die Kettenstäbe einwirken und mittels einer Kontermutter 18 festlegbar sind.

Die Anschlußstücke 4,5 sind U-förmig ausgebildet und haben einen Bogenteil 19,20 sowie an diesen anschließende Schenkel 21,22 bzw. 23,24, die mittels Spannschrauben 25 mit Mutter 26 zusammendrückbar und dadurch in Spanneingriff mit dem zwischen sie eingeführten Ende des Riemens 1 bringbar sind. Vorzugs-weise sind je Anschlußstück 4,5 zwei Spannschrauben 25,26 vorgesehen, die Bohrungen 27,28 in den Schenkeln 21,22 bzw. 23,24 und ebenso Bohrungen 29 an den Riemenenden durchgreifen.

Die Schenkel 21,22 bzw. 23,24 der Anschlußstücke 4,5 sind innenseitig mit Verankerungsansätzen versehen, die bei dem dargestellten Ausführungsbeispiel als Querrippen 30 etwa dreieckförmiger Querschnittsform ausgebildet sind. Die Querrippen können jeweils auf Lücke zueinander versetzt sein, liegen jedoch bevorzugt paarweise einander gegenüber und haben eine Vorsprungshöhe, die der Dicke der Außengummierungsschicht der aus gummierten Gewebelagen bestehenden Riemen 1 entspricht. Bei für Siebkettenförderbändern üblichen Riemen haben die Querrippen dementsprechend eine etwa 2 mm betragende Vorsprungshöhe.

Dementsprechend können sich die Verankerungsvorsprünge bis an die jeweils außenliegenden Gewebelagen der Riemen 1 heranerstrecken, wenn bei eingeführten Riemenenden die Schenkel der Anschlußstücke mittels der Spannschrauben 25,26 zusammen-

0162204

- 4 -

gedrückt werden und in Spanneingriff mit den Riemenenden gelangen. Anstelle von zwei oder wie dargestellt drei Paaren von Querrippen 30 können auch Verankerungsvorsprünge anderer Formgestalt vorgesehen werden, z.B. in Form spitzkegeliger Noppen od.dgl.Die Querösen 15,16 werden von den Bogenbereichen 19,20 der Anschlußstücke 4,5 sowie innenseitig von den Querrandkanten der Riemenenden begrenzt. Die Anschlußstücke 4,5 bestehen bevorzugt aus hochfestem Kunststoff, insbesondere Polypropylen, der nicht nur geeignet ist, die notwendige Festigkeit aufzubringen, sondern auch eine Schmierwirkung für die als Querstecker wirkenden Enden der Kettenstäbe 13,14 auszuüben, die im Betrieb eines Siebkettenförderbandes Lagerzapfen bilden, relativ zu denen die Anschlußstücke begrenzt schwenkbeweglich sind. Diese Schmierwirkung erhöht die Lebensdauer und verringert Geräuschbildungen im Betrieb.

DB/Ha

- 5 -

Ansprüche:

1.    Riemenschloß für Riemen von Siebkettenförderbändern, insbesondere von Hackfruchterntemaschinen, mit einem etwa H-förmigen Zwischenkupplungsstück, dessen Querschenkel in einem Zwischenraum zwischen Querösen an den Enden zu verbindender Riemen verläuft und dessen Längsschenkel die Querösen gabelförmig seitlich umgreifen und mit paarweise fluchtenden Querbohrungen zur Aufnahme der Enden von Kettenstäben versehen sind, die als Querstecker jeweils zugleich eine Queröse  an einem Riemenende verriegelnd durchgreifen, dadurch gekennzeichnet, daß jede Queröse (15,16) vom Bogenteil (19,20) eines etwa U-förmigen Anschlußstücks (4,5) gebildet ist, dessen Schenkel (21,22;23,24) mittels Spannschrauben (25,26) in Spanneingriff mit einem zwischen sie eingeführten Ende des Riemens (1) zusammendrückbar und innenseitig mit Verankerungsansätzen (30) versehen sind.

2.    Riemenschloß nach Anspruch 1, dadurch gekennzeichnet, daß als Verankerungsansätze Querrippen (30) vorgesehen sind

3.    Riemenschloß nach Anspruch 2, dadurch gekennzeichnet, daß die Querrippen (30) ein etwa dreieckförmiges Querschnittsprofil aufweisen.

4.    Riemenschloß nach Anspruch 2 oder 3, dadurch gekennzeichnet, daß die Querrippen (30) einander paarweise gegenüberliegen.

5. Riemenschloß nach einem oder mehreren der Ansprüche 1 bis 4, dadurch gekennzeichnet, daß die Verankerungsansätze (30) eine Vorsprungshöhe haben, die der Dicke der Außengummierungsschicht der Riemen (1) entspricht.

6. Riemenschloß nach Anspruch 5, dadurch gekennzeichnet, daß die Vorsprungshöhe etwa 2 mm beträgt.

7. Riemenschloß nach einem oder mehreren der Ansprüche 1 bis 6, dadurch gekennzeichnet, daß die Anschlußstücke (4,5) aus hochfestem Kunststoff bestehen.

8. Riemenschloß nach Anspruch 7, dadurch gekennzeichnet, daß die Anschlußstücke (4,5) aus Polypropylen formgespritzt sind.

Fig.1

Fig.2